Europäisches Patentamt

European Patent Office

Office européen des brevets

(11) Veröffentlichungsnummer: **0 261 312**
**A2**

(12) **EUROPÄISCHE PATENTANMELDUNG**

(21) Anmeldenummer: **87108181.6**

(51) Int. Cl.4: **B23Q 5/20**

(22) Anmeldetag: **05.06.87**

(30) Priorität: **22.09.86 DE 3632106**

(43) Veröffentlichungstag der Anmeldung:
**30.03.88 Patentblatt 88/13**

(84) Benannte Vertragsstaaten:
**CH DE FR GB IT LI**

(71) Anmelder: **MAHO Aktiengesellschaft**
**Postfach 1280**
**D-8962 Pfronten(DE)**

(72) Erfinder: **Babel, Werner**
**Achweg 19,**
**D-8962 Pfronten(DE)**

(74) Vertreter: **Patentanwälte Beetz sen. - Beetz**
**jun. Timpe - Siegfried - Schmitt-Fumian**
**Steinsdorfstrasse 10**
**D-8000 München 22(DE)**

(54) **Vorrichtung zur Winkelpositionierung einer Arbeitsspindel.**

(57) Gegenstand der Erfindung ist eine Vorrichtung zur Winkelpositionierung der Arbeitsspindel einer programmgesteuerten Fräs-und Bohrmaschine. Die Positioniervorrichtung enthält einen am Spindelgehäuse (1) montierten Antrieb (26) zum Verdrehen der Spindel (3, 6) nach Abschalten des Hauptantriebs und ein Arretierglied (34), das die Arbeitsspindel (3, 6) bei Erreichen ihrer vorgegebenen Winkelposition fixiert. Erfindungsgemäß enthält der Antrieb einen Elektromotor (26), dessen Welle über ein Ritzel (28) mit einem an der Spindel (3, 6) befestigten Zahnrad (21) kuppelbar ist. Das Arretierglied ist ein federbelasteter Indexierbolzen (34), der mit einem Zentrierkegel (18) in eine Bohrung (19) im Zahnrad (21) eingreift. Der Elektromotor (26) und der Indexierbolzen (34) sind auf einer Schwenkplatte (24) montiert, die durch einen Stellantrieb (29) aus einer oberen Ruhelage in eine untere Betriebsstellung verschwenkt wird.

Fig.3

## Vorrichtung zur Winkelpositionierung einer Arbeitsspindel

Die Erfindung betrifft eine Vorrichtung zur Winkelpositionierung der Arbeitsspindel einer programmgesteuerten Fräs-und Bohrmaschine der im Oberbegriff des Patentanspruchs 1 bzw. 5 angegebenen Gattung.

Derartige Positioniervorrichtungen sind notwendig, um bei programmgesteuerten Fräs-und Bohrmaschinen (Bearbeitungszentren) die Werkzeuge automatisch mittels eines entsprechend ausgebildeten Werkzeugwechslers auswechsein zu können. Damit das auszubauende Werkzeug von den Greiferzangen des Wechslers zuverlässig erfaßt werden kann, muß das Werkzeug zusammen mit der Arbeitsspindel in eine bestimmte Winkellage gebracht und in dieser fixiert werden.

Es sind bereits Vorrichtungen zur Spindelpositionierung in verschiedenen Ausführungen bekannt, die jedoch konstruktiv aufwendig und in der Herstellung teuer sind. Bei einer derartigen, aus der DE-OS 36 32 106 bekannten Positioniervorrichtung ist an der mit der Spindel fest verbundenen Spindelhülse eine sog. Herzkurve ausgebildet. Im Spindelgehäuse ist ein Stößel durch einen Stellantrieb verschiebbar gelagert, der mit einem Wälzkörper auf der durch die Herzkurve gebildeten Nockenbahn abrollt. Nach Abschalten des Spindelantriebs wird vor jedem Wechselvorgang der Stößel mittels seines Stellantriebs vorgeschoben, was eine entsprechende Verdrehung der von ihrem Antriebszug getrennten Arbeitsspindel in eine durch die Herzkurve bestimmte Stellung bewirkt. In dieser Position der Arbeitsspindel erfolgt der Werkzeugwechsel mittels eines automatisch arbeitenden Werkzeugwechslers, dessen Greifzangen am Bund des jeweiligen Werkzeughalters (ISO-Kegels) angreifen und das Werkzeug nach Lösen der Spannzange der Arbeitsspindel aus dieser herausziehen. Zur Sicherung der eingestellten Spindelposition kann ein zusätzlicher federbelasteter Fixierbolzen im Spindelgehäuse vorgesehen sein, der nach dem Einstellen der Spindel in die Wechselposition in eine Bohrung der Spindelhülse eingreift. Nachteilig bei dieser bekannten Positioniervorrichtung ist der hohe Herstellungsaufwand durch die feinbearbeitete Herzkurve und durch den notwendigen Stellantrieb für den Stößel. Ferner vergrößern sich durch die die Herzkurve tragende Hülse die drehenden Massen und der Außendurchmesser der Spindel. Die notwendige Anordnung des Stößels und seines Antriebs seitlich neben der Spindel führt zu einer unerwünschten Verbreiterung des Spindelgehäuses.

Aufgabe der Erfindung ist es, eine Positioniervorrichtung für die Arbeitsspindel einer programmgesteuerten Fräs-und Bohrmaschine zu schaffen, die konstruktiv und herstellungstechnisch einfach ist, bei günstiger Anordnung im Spindelgehäuse weniger Platz beansprucht und aus nur weni gen einfachen Einzelteilen besteht.

Diese Aufgabe wird erfindungsgemäß dadurch gelöst, daß der Antrieb einen Elektromotor enthält, dessen Welle über ein Ritzel mit einem auf der Spindel befestigten Zahnrad kuppelbar ist und daß das Arretierglied ein federbelasteter Fixierbolzen ist, der bei eingekuppeltem Ritzel selbsttätig in eine Bohrung im Zahnrad eingreift und beim Lösen der Kupplungsverbindung zwischen dem Ritzel und dem Zahnrad selbsttätig ausrückt.

Für programmgesteuerte Universal-Fräs-und Bohrmaschinen (Bearbeitungszentren) mit wahlweise bzw. wechselweise arbeitender horizontaler und vertikaler Arbeitsspindel ist eine im Patentanspruch 5 angegebene Positioniervorrichtung konzipiert, die nicht direkt auf die eine oder andere Arbeitsspindel einwirkt, sondern welche die für beide Arbeitsspindeln gemeinsame Haupt-Antriebswelle in solchen vorbestimmten Winkelstellungen positioniert, die den Wechselpositionen der jeweils aktiven Arbeitsspindel entsprechen. Gegenüber herkömmlichen Positioniervorrichtungen, von denen jeweils eine für die horizontale Arbeitsspindel und eine weitere für die vertikale Arbeitsspindel vorgesehen waren, stellt diese neue Lösung eine erhebliche Vereinfachung dar, da sie nur einen einzigen Hilfsantrieb (Elektromotor) enthält, der nach Abschalten des Hauptantriebes die Hauptwelle und damit auch die jeweils aktive Arbeitsspindel mit relativ geringer Geschwindigkeit verdreht. Während dieses Vorganges wird ein ausgewählter Fixierbolzen gegen einen auf der Hauptwelle befestigten Indexierring bis zur Anlage seiner verjüngten Zentrierspitze an der Ringoberfläche vorgeschoben. Im Ring ist eine Indexierbohrung ausgebildet, in die der Fixierbolzen mit seinem verjüngten Ende einrückt, wodurch die Hauptwelle und gleichzeitig auch die jeweils aktive Arbeitsspindel stillgesetzt werden.

Gemäß einer zweckmäßigen Ausgestaltung der Erfindung sind bei beiden Lösungen der Elektromotor und die Fixierbolzen an einer gemeinsamen Halterung montiert, die im Spindelgehäuse durch einen Stellantrieb zwischen einer Ruhestellung und einer Betriebsstellung motorisch um eine Achse - schwenkbar ist, wobei in der Betriebsstellung das Ritzel des Hilfsantriebs mit dem Zahnrad eingekuppelt ist. Der Fixierbolzen ist in einer Halterung der Platte außermittig und parallel zur Spindelachse axial verschiebbar angeordnet, so daß seine verjüngte Zentrierspitze während der Verdrehbewegung der Spindel durch den Elektromotor auf der Oberseite des mit der Spindel drehfest verbundenen Zahnrades unter Federdruck gleitet und selbsttätig in die entsprechend positionierte Zentrieröffnung im Zahnrad einrückt. Die Größe der Verschiebebewegung des Fixierbolzens in seiner Halterung zwischen zwei Endstellungen ist kleiner als die Größe der Schwenk-bzw. Hubbewegung der den Elektromotor tragenden Platte, so daß der Fixierbolzen aus der Zentrierbohrung herausgezogen wird, wenn die Platte durch Federkraft aus ihrer unteren Betriebsstellung in die obere Ruhestellung bewegt wird.

Die erfindungsgemäße Positioniervorrichtung ist im Spindelgehäuse angeordnet und besteht aus konstruktiv einfachen Einzelteilen. Durch die Verwendung des einfachen und somit billigen Elektromotors für die Spindelverdrehung kann der Hauptantriebszug der Arbeitsspindel inklusive seiner Steuerung einfacher ausgelegt werden. Insgesamt führt die Verwendung der erfindungsgemäßen Positioniervorrichtung zu einer exakten Festlegung der Arbeitsspindel für jeden Werkzeugwechselvorgang, und zwar mit technisch einfachen Mitteln.

Im folgenden werden Ausführungsbeispiele der Erfindung anhand der Zeichnung im einzelnen beschrieben. Es zeigen:

Fig. 1 einen vertikalen Fräskopf einer Fräsmaschine mit der Positioniervorrichtung im Axialschnitt;

Fig. 2 die Positioniervorrichtung nach Fig. 1 in Draufsicht;

Fig. 3 die Positioniervorrichtung nach Fig. 2 im vergrößerten Teilschnitt A-A;

Fig. 4 die Positioniervorrichtung im Axialschnitt B-B in Fig. 2;

Fig. 5, 6, 7 eine weitere Positioniervorrichtung für die Hauptwelle.

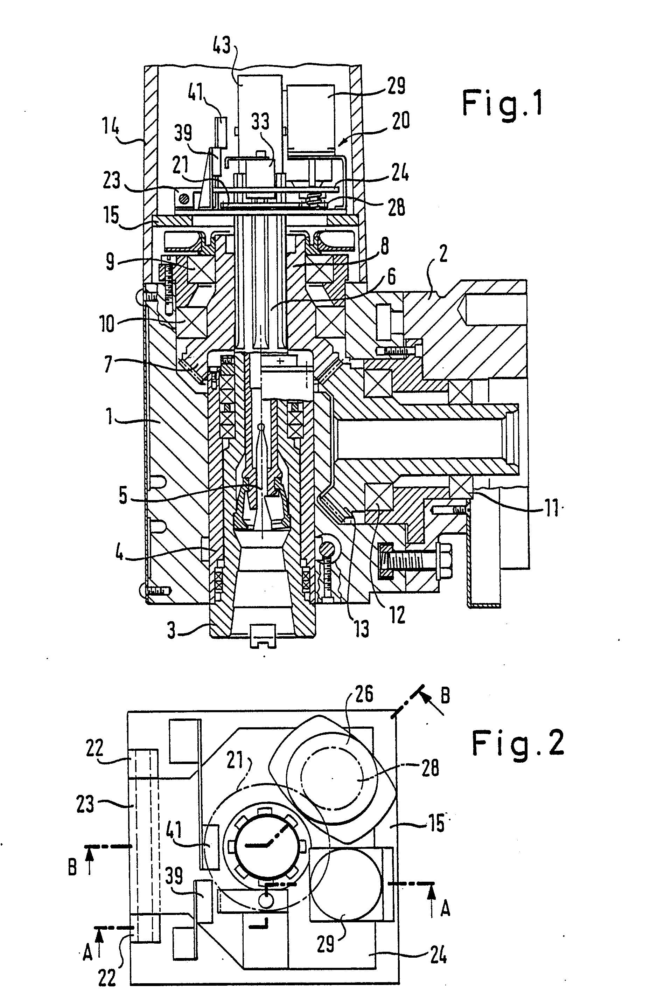

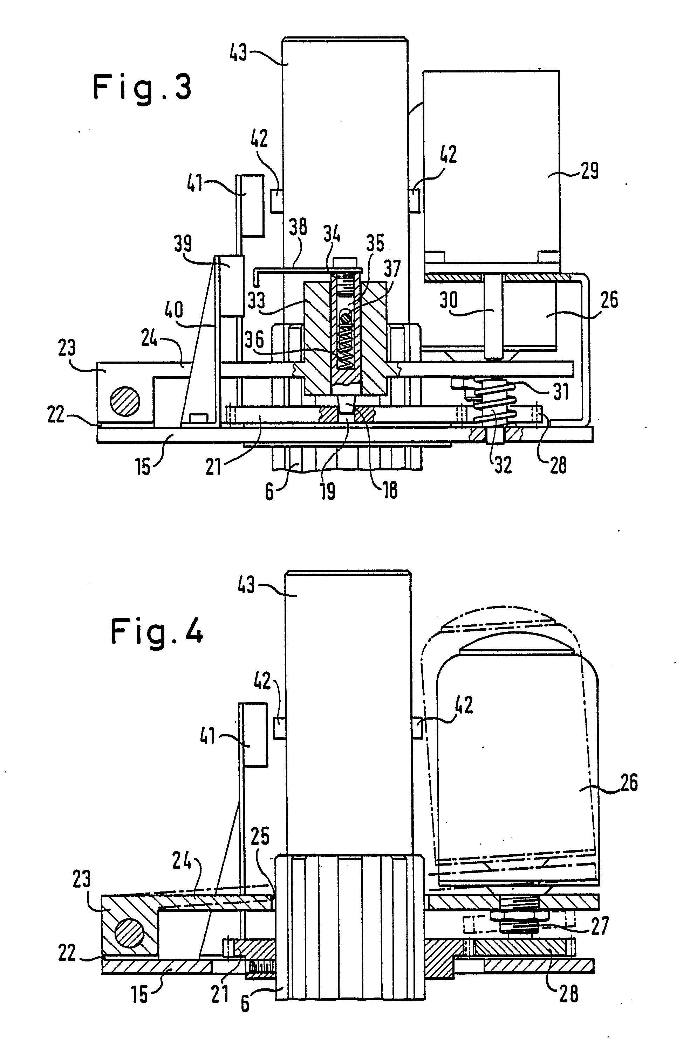

Der in Fig. 1 dargestellte Vertikalfräskopf hat ein Gehäuse 1, das über ein Zwischenstück 2 an der Stirnseite eines - nicht dargestellten - Spindelstocks montiert wird. Im Gehäuse 1 ist eine Arbeitsspindel 3 mit einer Spindelhülse 4 und einer inneren Spannzange 5 gelagert. Auf dem keilgenuteten oberen Abschnitt 6 der Spindel 3 ist ein Kegelrad 7 aufgekeilt, dessen buchsenförmiger Teil 8 über zwei Wälzlager 9, 10 im Gehäuse 1 gelagert ist. Das Kegelrad 7 kämmt mit einem im Zwischenstück 2 in zwei Wälzlagern 11, 12 horizontal gelagerten zweiten Kegelrad 13, das mit der horizontalen Welle des Hauptantriebs drehfest verbunden ist. Der obere Teil des Gehäuses 1 wird von einem Gehäusekasten 14 gebildet, in dem eine formsteife Platte 15 fest montiert ist. In diesem oberen Gehäuseteil 14 befindet sich die im folgenden anhand der Fig. 3, 4 im einzelnen beschriebene Positioniervorrichtung 20.

Auf dem keilgenuteten Abschnitt 6 der Spindel 3 ist oberhalb der von der Spindel frei durchragten ortsfesten Platte 15 ein Stirnzahnrad 21 drehfest aufgekeilt, in dem eine Zentrierbohrung 19 außermittig ausgebildet ist. An der in den Fig. 3, 4 linken Seite sind auf der Platte 15 Lagerböcke 22 befestigt, an denen nach unten weisende Böcke 23 einer Schwenkplatte 24 um eine horizontale Drehachse schwenkbar gelagert sind. Diese Schwenkplatte 24 erstreckt sich mit einem vertikalen Abstand etwa parallel zur ortsfesten Platte 15 oberhalb des Stirnzahnrades 21 und weist einen zentralen Ausschnitt 25 auf, durch den das keilgenutete Spindelende 6 hindurchragt. Auf der dem Gelenk 22, 23 gegenüberliegenden Seite der Schwenkplatte 24 ist ein Elektromotor 26 montiert, dessen senkrecht zur Plattenebene verlaufende Welle 27 durch die Schwenkplatte 24 drehbar hindurchragt und an ihrem unteren Ende ein Stirnritzel 28 trägt. Auf der ortsfesten Platte 15 ist neben dem Elektromotor 26 an einem Bügel ein Stellantrieb 29 montiert, der bei der dargestellten Ausführung ein Elektromagnet ist. Der bewegliche Teil des Stellantriebs 29, d. h. der mit dem Anker des Elektromagneten fest verbundene vertikale Stößel 30, drückt auf die Oberfläche der Schwenkplatte 24. Statt des dargestellten Elektromotors kann dieser Stellantrieb auch ein Druckmittelzylinder od. dgl. sein. Wie in Fig. 3 dargestellt, befindet sich in der Stößelachse eine Druckfeder 31 zwischen der ortsfesten Platte 15 und der Schwenkplatte 24, die einen in der Platte 15 befestigten Zapfen 32 umgibt und auf die Schwenkplatte 24 eine nach oben wirkende Kraft ausübt.

Ferner ist auf der Schwenkplatte 24 ein Halter 33 für einen Fixierbolzen 34 vorgesehen. Dieser Fixierbolzen 34 ist in einer Längsbohrung des Halters 33 begrenzt verschiebbar angeordnet und weist einen vorstehenden Fixierkegel 18 sowie eine zentrale Blindbohrung 35 auf, in der eine Druckfeder 36 sitzt, deren oberes Ende sich an einem im Halter 33 befestigten Querstift 37 abstützt. Der Querstift 37 durchragt Langlöcher im hülsenförmigen oberen Teil des Fixierbolzens 34, welche die Größe seiner Längsverschiebung begrenzen. Am oberen Ende des Fixierbolzens 34 ist eine Schaltfahne 38 befestigt, die berührungslos mit einem Schalter 39 zusammenwirkt, der mittels eines profilierten Winkeleisens 40 auf der ortsfesten Platte 15 - oder an einem geeigneten anderen Gehäuseteil - montiert ist. Ein weiterer gehäusefest montierter Schalter 41 wirkt berührungslos mit Schaltnocken 42 zusammen, die in regelmäßigen Winkelabständen gegeneinander versetzt an der oberen Verlängerung 43 der Spindel befestigt sind.

Die vorstehend beschriebene Positioniervorrichtung arbeitet wie folgt:

Wenn ein - nicht dargestelltes - Werkzeug gewechselt werden soll, wird der Hauptantrieb der Arbeitsspindel abge schaltet, so daß die Spindel 3, 6 frei drehen ann. Anschließend wird der Stellantrieb 29 eingeschaltet, der ein Elektromagnet, ein Druckmittelzylinder oder ein mechanischer Linearantrieb sein kann. Der Stößel 30 des Stellantriebs 29 drückt gegen die Oberfläche der Schwenkplatte 24 und verschwenkt diese gegen die Kraft der Druckfeder 31 aus der in Fig. 4 gestrichelt dargestellten oberen Ruhelage in die mit durchgezogenen Linien dargestellte untere Betriebsstellung. Gleichzeitig mit dem Stellantrieb 29 wird der Elektromotor 26 gestartet. Dieser Motor 26 ist auf der Schwenkplatte so positioniert, daß sein Ritzel 28 beim Niederschwenken der Schwenkplatte 24 selbsttätig mit dem Stirnzahnrad 21 in Eingriff gelangt. Der aktivierte Motor 26 treibt somit die Arbeitsspindel 3 über das Zahnradpaar 28, 21. Beim Niederschwenken der Schwenkplatte 24 wird der Zentrierkegel 18 des federbelasteten Fixierbolzens 34 gegen die Oberfläche des Zahnrads 21 gedrückt, auf welcher er bei dessen Verdrehung gleitet. Sobald die im Stirnzahnrad 21 entsprechend positionierte Zentrierbohrung 19 sich unter dem Zentrierkegel 18 hindurchbewegt, wird letzterer in die Bohrung durch die Kraft der Feder 36 eingeschoben. Durch diesen Eingriff des Zentrierkegels 18 in die Bohrung 19 wird die Drehbewegung der verschiedenen Teile durch den Elektromotor 26 unterbrochen und damit die Arbeitsspindel 3, 6 in der vorgegebenen Wechselposition stillgesetzt. Die Form des Zentrierkegels sichert eine genaue Positionierung des Zahnrads und damit der Arbeitsspindel. Die Längsverschiebung des Fixierbolzens 34 bei seinem Eingriff in die Bohrung 19 führt zu einer Aktivierung des Schalters 39, der durch ein entsprechendes Signal an die - nicht dargestellte - Programmsteuerung anzeigt, daß die Arbeitsspindel 3 positioniert und für einen auto matischen Werkzeugwechsel bereit ist.

Nach vollzogenem Werkzeugwechsel wird der Stellantrieb 29 abgeschaltet, woraufhin die Druckfeder 31 die Schwenkplatte 24 in ihre obere Ruhestellung bewegt. Durch diese Aufschwenkbewegung der Platte 24 gelangt das Ritzel 28 vom Stirnzahnrad 21 außer Eingriff und der Zentrierkegel 18 wird aus der Bohrung 19 herausgezogen.

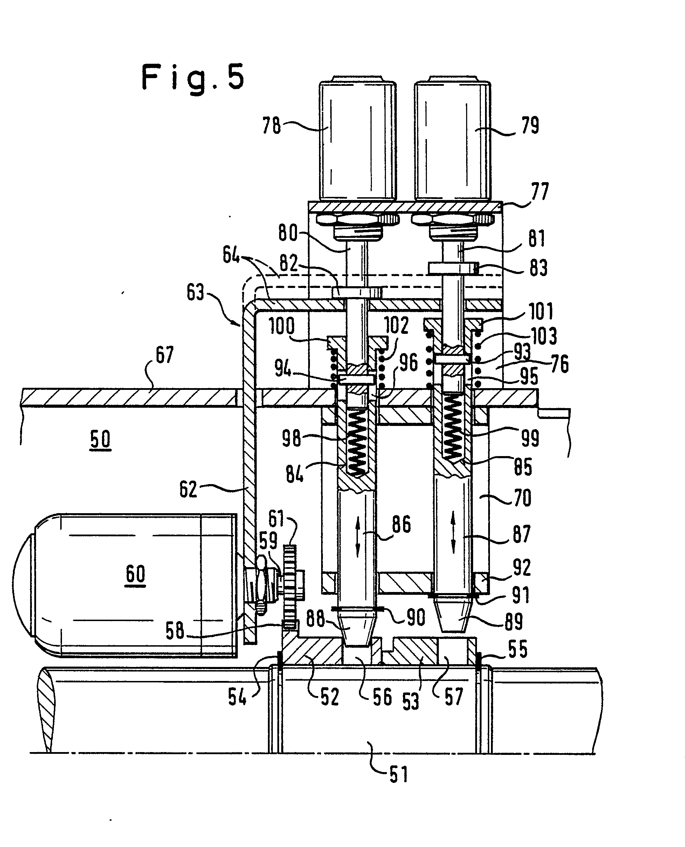

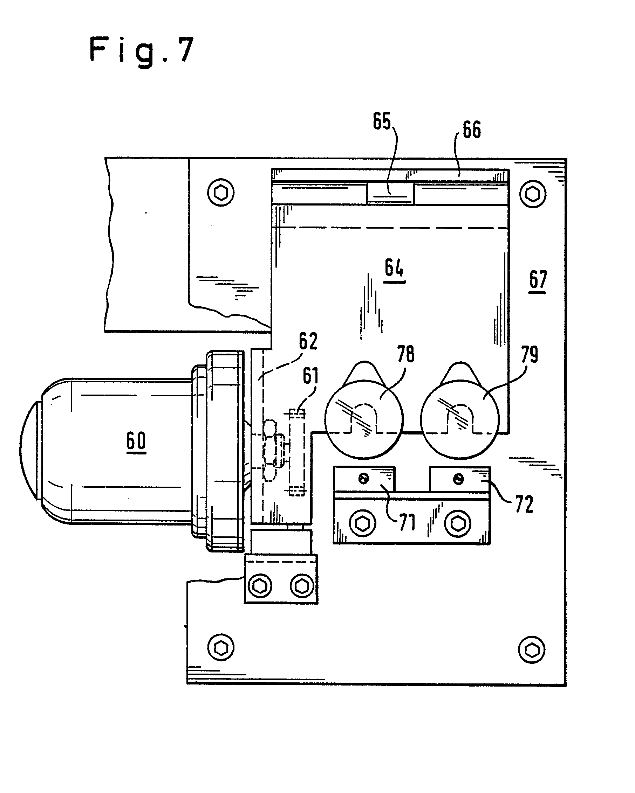

Bei dem in den Fig. 5 bis 7 dargestellten Ausführungsbeispiel ist die Positioniervorrichtung in den Spindelkasten bzw. den Spindelstock 50 eingebaut und wirkt direkt auf die Hauptantriebswelle 51. Auf dieser Hauptantriebswelle 51 sind zwei gesonderte Indexierringe 52, 53 mit Hilfe von Anlagescheiben 54, 55 befestigt, die in einer ausgewählten Winkelstellung je eine radiale Indexierbohrung 56, 57 aufweisen. Die beiden Indexierringe 52, 53 sind gegeneinander und gegenüber der Hauptantriebswelle 51 undrehbar gehalten Die Verwendung von zwei gesonderten Ringen gestattet die genaue Einstellung der Winkelposition der Indexierbohrungen 56 bzw. 57 während der Montage im Hinblick auf die jeweiligen Winkel-Wechselstellungen der horizontalen bzw. der vertikalen Arbeitsspindel. Statt der beiden gesonderten Ringe 52, 53 kann auch ein gemeinsamer Ring entsprechender Länge verwendet werden, der dann die beiden Indexierbohrungen 56, 57 an geeigneten Winkelpositionen aufweist. Der in Fig. 5 linke Indexierring 52 weist einen Zahnkranz 58 auf, der im dargestellten Betriebszustand mit einem auf der Abtriebswelle 59 eines Elektromotors 60 festgelegten Ritzel 61 in Eingriff steht.

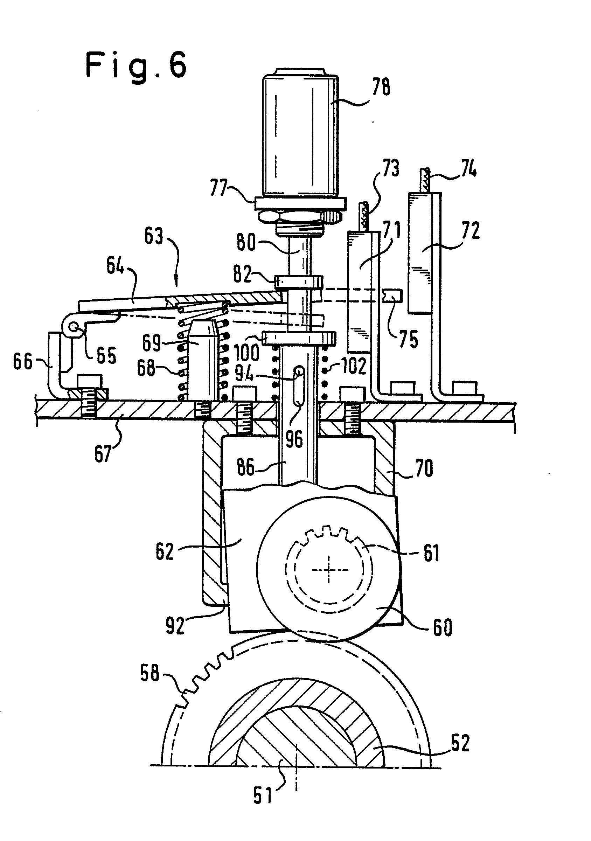

In der Darstellung nach Fig 6. ist das Ritzel 61 des Elektromotors 60 vom Zahnkranz 59 ausgerückt. Wie aus den beiden Fig. 5, 6 ersichtlich, ist der Elektromotor 60 bzw. sein Wellenaustritt an dem vertikal abgebogenen plattenförmigen Schenkel 62 einer schwenkbaren Halterung 63 montiert. Wie in Fig. 6 gezeigt, weist diese vertikale Halterung 63 eine obere Platte 64 auf, die an ihrem linken Ende über ein Schwenklager 65 und einen Winkelhalter 66 auf einer tragenden Wand bzw. Platte 67 des Spindelstocks 50 montiert ist. Auf dieser Platte 67 stützt sich eine Druckfeder 68 ab, die mit ihrem anderen Ende an der Unterseite der Platte 64 angreift und diese nach oben drückt. Die Druckfeder 68 ist um einen Zapfen 69 gewickelt, der als Federführung und gleichzeitig als Begrenzungsanschlag für die Bewegung der Platte 64 dient. An der Unterseite dieser Platte 67 ist ferner ein bügelförmiger Halter 70 angeschraubt und an ihrer Oberseite sind zwei Endschalter 71, 72 montiert, die über elektrische Anschlüsse 73, 74 mit der Steuerung der Werkzeugmaschine verbunden sind und durch Zungen 75 berührungslos betätigt werden, die mit den Rastbolzen 86, 87 verbunden sind.

Wie in Fig. 5 gezeigt, ist ein Tragbügel 76 mit seinem vertikalen Schenkel auf der ortsfesten Platte 67 befestigt, an dessen horizontal abgewinkeltem oberen Schenkel 77 zwei Linearantriebe 78, 79, z. B. Druckmittelzylinder oder Elektromagnete, aufrecht nebeneinander montiert sind Die Stößel 80, 81 dieser beiden Linearantriebe 78, 79 weisen in vorgegebenem Abstand je einen Ringbund 82, 83 auf und greifen mit ihrem unteren Endteil in die Blindbohrung 84, 85 je eines Indexierbolzens 86, 87 ein. Die Indexierbolzen 86, 87 haben verjüngte Zentrierenden 88, 89, die -wie in Fig. 5 gezeigt - zumindest teilweise in die jeweiligen Zentrierbohrungen 56, 57 der Ringe 52, 53 eingreifen können. Oberhalb dieser Zentrierenden 88, 89 ist jeweils eine Federscheibe 90, 91 als Begrenzungsanschlag für die Verschiebebewegung vorgesehen, die im angehobenen Zustand - vgl. die Stellung des rechten Arretierbolzens 87 - an einem horizontal abgebogenen Schenkel 92 des Tragbügels 70 anliegt. Die Stößel 80, 81 sind über je einen Querstift 93, 94 mit dem hohlen Teil der Arretierbolzen 86, 87 drehfest verbunden, wobei ein sich axial erstreckendes Langloch 95, 96 eine begrenzte Relativbewegung des Stößels in der Blindbohrung 84, 85 des jeweiligen Arretierbolzens 86, 87 ermöglicht. Im freien Teil jeder Blindbohrung 84, 85 ist je eine Schraubenfeder 98, 99 eingespannt, welche den jeweiligen Arretierbolzen 86, 87 und den darin aufgenommenen Stößel 80, 81 auseinanderdrückt. Ferner ist zwischen einem Ringbund 100, 101 am oberen Ende jedes Arretierbolzens 86, 87 und der ortsfesten Platte 67 je eine weitere Feder 102, 103 vorgesehen, die den jeweiligen Arretierbolzen 86, 87 in seiner angehobenen Stellung hält.

Die vorstehend beschriebene Positioniervorrichtung arbeitet in folgender Weise:

Wenn für einen Werkzeugwechsel entweder die horizontale oder die vertikale Arbeitsspindel in der vorgegebenen Wechselposition stillgesetzt und arretiert werden soll, wird der - nicht dargestellte - Hauptantrieb abgeschaltet und einer der beiden Linearantriebe 78, 79 über die dargestellten Anschlüsse von der Steuerung aktiviert, wobei je einer dieser beiden Linearantriebe der Horizontalspin del und der andere der Vertikalspindel zugeordnet ist. Durch Ausfahren des jeweiligen Stößels 80, 81 wird die schwenkbare Halterung 63 incl. der oberen Tragplatte 64 und ihres vertikalen Schenkels 62 um das Lager 65 aus der in Fig. 5 gestrichelten oberen Lage in die durchgezogene untere Stellung verschwenkt, wodurch das Ritzel 61 des Elektromotors 60 mit dem Zahnkranz 59 auf dem Indexierring 52 in Eingriff gelangt und das Einschalten des Elektromotors 60 die Hauptantriebswelle 51 in langsame Drehbewegung versetzt. Die Ausfahrbewegung des jeweiligen Stößels 80, 81 ergibt ferner eine Axialverschiebung des mit ihm gekoppelten Indexierbolzens 86, 87, dessen Zentrierspitze 88 auf der Oberfläche des jeweiligen Ringes 52, 53 gleitet und bei der Vorbeibewegung der jeweiligen Indexierbohrung 56, 57 in diese eingreift, wie dies für den in Fig. 5 linken Bolzen 86 dargestellt ist. Dabei bewirkt die in die Blindbohrung 84, 85 eingespannte Druckfeder 98, 99 eine federbelastete Anlage des jeweiligen Indexierbolzens 86, 87 mit seiner Zentrierspitze 88, 89 auf der glatten Umfangsfläche des zugeordneten Ringes und einen entsprechend federnden Eingriff in die jeweilige Indexierbohrung 56, 57. Durch diesen Eingriff wird die Hauptwelle 51 in einer bestimmten Winkelstellung fixiert, welche der Wechselstellung der mit dieser Hauptwelle 51 praktisch spielfrei gekoppelten horizontalen oder vertikalen Arbeitsspindel entspricht.

Nach Beendigung des Werkzeugwechsels wird der jeweils aktive Linearantrieb 78, 79 abgeschaltet, woraufhin die Druckfeder 102, 103 den Indexierbolzen aus der in Fig. 5 linken Eingriffsstellung in die in Fig. 5 rechte ausgerückte Stellung verschiebt. Die Druckfeder 68 drückt die Schwinge 64 nach oben und bringt dadurch den Hilfsantrieb außer Eingriff. Damit ist der Wechselvorgang abgeschlossen und die Maschine kann mit dem neueingewechselten Werkzeug arbeiten.

Die Erfindung ist nicht auf das dargestellte Ausführungsbeispiel beschränkt. So kann statt eines Elektromagneten ein anderer Stellantrieb, z. B. ein Stellzylinder, ein Spindeltrieb od. dgl., eingesetzt werden. Ferner kann die Kraft zum Einkuppeln des Ritzels mit dem Zahnrad auch durch geeignete Getriebe-und Kupplungsmittel direkt von der Drehbewegung der Motorwelle abgeleitet werden. Schließlich lassen sich statt der gemeinsamen Schwenkplatte 24 auch andere bewegliche Träger für den Elektromotor, den Stellantrieb und den Fixierbolzen einsetzen.

## Ansprüche

1. Vorrichtung zur Winkelpositionierung der Arbeitsspindel einer programmgesteuerten Fräs-und Bohrmaschine, bestehend

aus einem am Spindelgehäuse montierten Antrieb zum Verdrehen der Spindel nach Abschalten des Hauptantriebes und

aus einem Arretierglied, das die Arbeitsspindel in der vorgegebenen Winkelposition fixiert,

**dadurch gekennzeichnet,**

daß der Antrieb einen Elektromotor (26) enthält, dessen Welle (27) über ein Ritzel (28) mit einem auf der Spindel (3, 6) befestigten Zahnrad (21) kuppelbar ist und

daß das Arretierglied ein federbelasteter Fixierbolzen (34) ist, dessen verjüngter Endteil (18) in eine Bohrung (19) im Zahnrad (21) eingreift und mit dem Lösen der Kupplungsverbindung zwischen dem Zahnrad (21) und dem Ritzel (28) ausrückt.

2. Vorrichtung nach Anspruch 1,
dadurch gekennzeichnet,
daß der Elektromotor (26) und der Fixierbolzen (34) an einer Platte (24) montiert sind, die durch einen Stellantrieb (29) zwischen einer oberen Ruhestellung und einer unteren Betriebsstellung bewegbar ist, in welcher das Ritzel (28) mit dem Zahnrad (21) kämmt.

3. Vorrichtung nach Anspruch 2,
dadurch gekennzeichnet,
daß die Platte (24) um ein horizontales Gelenk (22, 23) schwenkbar am Spindelgehäuse (1) montiert und durch den Stellantrieb (29) bewegbar ist.

4. Vorrichtung nach einem der Ansprüche 1 bis 3,
dadurch gekennzeichnet,
daß der Fixierbolzen (34) in einem an der Schwenkplatte (21) außermittig fest montierten Halter (33) um eine Distanz axial verschiebbar ist, die kleiner als der Bewegungsbereich der Platte (24) ist.

5. Vorrichtung zur wahlweisen Winkelpositionierung der vertikalen oder horizontalen Arbeitsspindel einer programmgesteuerten Universal-Fräsmaschine, bestehend

aus einem im Spindelgehäuse montierten Hilfsantrieb zum Verdrehen der jeweiligen Arbeitsspindel nach Abschalten des Hauptantriebs und

aus mindestens einem Arretierglied zum Fixieren der Arbeitsspindel in der vorgegebenen Wechselposition,

**dadurch gekennzeichnet,**

daß der Hilfsantrieb (60) mit der Hauptantriebswelle (51) für die vertikale und die horizontale Arbeitsspindel kuppelbar ist und

daß je ein der horizontalen und der vertikalen Arbeitsspindel zugeordnetes Arretierglied (86, 87) vorgesehen ist, das die Hauptantriebswelle (51) in einer vorbestimmten Winkelposition fixiert, welche der gewünschten Wechselstellung der vertikalen bzw. der horizontalen Arbeitsspindel entspricht.

6. Vorrichtung nach Anspruch 5,
dadurch gekennzeichnet,
daß auf der Hauptantriebswelle (51) ein mit dem Hilfsantrieb (60) kuppelbares Zahnrad (58) und mindestens ein Indexierring (52, 53) drehfest montiert sind und

daß die Arretierglieder (86, 87) einzeln motorisch bewegbare Fixierbolzen sind, von denen einer während der Verdrehung der Hauptantriebswelle (51) auf der Oberfläche des Rings (52, 53) gleitet und die Hauptantriebswelle (51) durch Eingreifen seines verjüngten Indexierendes (88, 89) in eine Indexierbohrung (56, 57) des Ringes (52, 53) fixiert.

7. Vorrichtung nach Anspruch 5 oder 6,
dadurch gekennzeichnet,
daß der Hilfsantrieb (60) ein Elektromotor ist und die beiden Fixierbolzen (86, 87) an einer motorisch bewegbaren gemeinsamen Halterung (63) montiert sind.

8. Vorrichtung nach einem der Ansprüche 5 bis 7,
dadurch gekennzeichnet,
daß die quer zur Hauptantriebswelle (51) ausgerichteten Fixierbolzen (86, 87) über je einen Stellantrieb (78, 79) verfügen, die an einem ortsfesten Bauteil (67, 77) des Spindelkastens (50) montiert sind und die auch den Elektromotor (60) tragende gemeinsame Halterung (63) zum Ein-und Auskuppeln seines Ritzels (61) mit dem Zahnrad (59) bewegen.

9. Vorrichtung nach einem der Ansprüche 5 bis 8,
dadurch gekennzeichnet,
daß auf der Hauptantriebswelle (51) zwei getrennte Indexierringe (52, 53) mit je einer Indexierbohrung (56, 57) verstellbar montiert und mit dem Zahnrad (59) drehfest verbunden sind

10. Vorrichtung nach einem der Ansprüche 5 bis 9,
dadurch gekennzeichnet,
daß die Halterung (63) eine an Scharnieren (65) im Spindelkasten (50) angelenkte federbelastete Schwinge ist, an deren einem vertikal abgewinkelten Seitenschenkel (62) der Elektromotor so angebracht ist, daß das an der Motorwelle (59) befestigte Ritzel (61) durch eine Schwenkbewegung der Schwinge (63) mit dem Zahnrad (58) in Eingriff gelangt.

11. Vorrichtung nach einem der Ansprüche 5 bis 10,
dadurch gekennzeichnet,
daß zwischen den Stößeln (80, 81) jedes Linearantriebs (78, 79) und dem zugehörigen Arretierbolzen (86, 87) ein federbelasteter toter Gang vorgesehen ist.

12. Vorrichtung nach einem der vorhergehenden Ansprüche,
dadurch gekennzeichnet,
daß der Elektromotor (26) und die Stellantriebe (29, 78, 79) mit der Programmsteuerung der Werkzeugmaschine elektrisch verbunden sind, und daß Endschalter die Stellung der Indexierbolzen erfassen.

13. Vorrichtung nach einem der vorhergehenden Ansprüche,
dadurch gekennzeichnet,
daß die Stellantriebe (29, 78, 79) Elektromagnete sind, deren axial bewegliche Anker über je einen Stößel (30, 80, 81) auf die Schwenkhalterung (24, 63) gegen die Kraft einer Druckfeder (31, 68) einwirkt.

14. Vorrichtung nach einem der vorhergehenden Ansprüche,
dadurch gekennzeichnet,
daß die Stellantriebe (29, 78, 79) Druckmittelzylinder sind.

15. Vorrichtung nach einem der vorhergehenden Ansprüche,
dadurch gekennzeichnet,
daß die Bewegung der Schwenkhalterung (24, 63) aus der Drehbewegung der Stellantriebe (29, 78, 79) abgeleitet wird.

Fig.1

Fig.2

# Fig.3

# Fig.4

# Fig.5

# Fig.6

# Fig.7